# EUROPÄISCHE PATENTANMELDUNG

(11) **EP 4 478 592 A1**
(43) Veröffentlichungstag der Anmeldung: **18.12.2024**
(21) Anmeldenummer: 23179040.3
(22) Anmeldetag: 13.06.2023
(51) Int. Cl.: H02M 1/00, H02M 1/36, H02M 3/335, H02M 7/487, H02J 3/38

(54) **STROMRICHTER UND VERFAHREN ZUM BETREIBEN EINES STROMRICHTERS**

(71) Anmelder: FRONIUS INTERNATIONAL GmbH, 4643 Pettenbach (AT)
(72) Erfinder: Wallisch, Gerhard, 4600 Wels-Thalheim (AT); Overbeck, Ruben, 4600 Wels-Thalheim (AT); Murauer, Simon, 4600 Wels-Thalheim (AT)
(74) Vertreter: Patentanwälte Pinter & Weiss OG

(57) **Zusammenfassung**

Für einen schaltungstechnisch einfachen Stromrichter, mit dem die Eigenenergieversorgung, die Symmetrierung des Zwischenkreises und das Vorladen des Zwischenkreises aus der AC-Seite möglich ist, ist im Stromrichter (1) ein DC/DC-Versorgungswandler (16) vorgesehen, wobei ein erster DC-Wandleranschluss (17) des DC/DC-Versorgungswandlers (16) mit dem DC-Eigenversorgungsbus (15) verbunden ist und ein zweiter DC-Wandleranschluss (18) des DC/DC-Versorgungswandlers (16) mit dem Gleichspannungszwischenkreis (8) verbunden ist und im Betrieb des Stromrichters (1) am zweiten DC-Wandleranschluss (18) des DC/DC-Versorgungswandlers (16) die Zwischenkreisspannung (U_{ZK}) oder zumindest eine Kondensatorspannung (U_{C1}, U_{C2}) anliegt, und ist ferner im Stromrichter (1) ein DC/DC-Ladewandler (20) vorgesehen, wobei ein erster DC-Wandleranschluss (22) des DC/DC-Ladewandlers (20) mit dem DC-Eigenversorgungsbus (15) verbunden ist und ein zweiter DC-Wandleranschluss (21) des DC/DC-Ladewandlers (20) mit einer der Zahl der Zwischenkreiskondensatoren (C_{ZK}) entsprechenden Zahl an DC-Ladeanschlüssen (21a, 21b) ausgeführt ist, wobei jeder DC-Ladeanschluss (21a, 21b) mit je einem Zwischenkreiskondensator (C_{ZK}) verbunden ist.

## Beschreibung

Die gegenständliche Erfindung betrifft einen Stromrichter mit einem DC-Anschluss, an dem im Betrieb eine elektrische Gleichspannungsgröße anlegbar ist, und einem AC-Anschluss, an dem im Betrieb eine elektrische Wechselspannungsgröße anlegbar ist, wobei im Stromrichter ein DC/AC-Hauptwandler mit einem DC-Wandleranschluss und einem AC-Wandleranschluss vorgesehen ist und der AC-Wandleranschluss mit dem AC-Anschluss des Stromrichters verbunden ist und der DC-Wandleranschluss mit einem Gleichspannungszwischenkreis, an dem im Betrieb des Stromrichters eine Zwischenkreisspannung anliegt, verbunden ist, wobei der Gleichspannungszwischenkreis zumindest zwei in Serie geschalteten Zwischenkreiskondensatoren umfasst und an den Zwischenkreiskondensatoren im Betrieb des Stromrichters jeweils eine Kondensatorspannung anliegt, wobei der DC-Anschluss des Stromrichters mit dem Gleichspannungszwischenkreis verbunden ist, wobei im Stromrichter ein AC/DC-Versorgungswandler vorgesehen ist, der mit einem AC-Wandleranschluss des AC/DC-Versorgungswandlers mit dem AC-Anschluss des Stromrichters verbunden ist und mit einem DC-Wandleranschluss des AC/DC-Versorgungswandlers mit einem DC-Eigenversorgungsbus des Stromrichters verbunden ist. Die Erfindung betrifft auch ein Verfahren zum Betreiben eines solchen Stromrichters.

Stromrichter sind bekannte leistungselektronische Geräte, die als Wechselrichter (DC/AC-Wandler) zur Wandlung einer Gleichspannungsgröße (DC) (elektrischer Strom oder elektrische Spannung) in eine Wechselspannungsgröße (AC) (elektrischer Strom oder elektrische Spannung) arbeiten, oder umgekehrt als Gleichrichter (AC/DC-Wandler). Es sind auch bidirektionale Stromrichter bekannt, die einen Energiefluss in beide Richtungen ermöglichen. An einem Anschluss des Stromrichters liegt damit eine Gleichspannungsgröße an und am anderen Anschluss eine Wechselspannungsgröße.

Die Gleichspannungsgröße wird von einer Gleichspannungsquelle, wie einer Batterie, Photovoltaikanlage usw., bereitgestellt oder wird von einer Gleichspannungssenke, wie einer Batterie, einem Umrichter usw., aufgenommen. Die Wechselspannungsgröße wird von einer Wechselspannungssenke, wie einem AC-Netz usw., aufgenommen, oder von einer Wechselspannungsquelle, wie einem AC-Netz, einer Windkraftanlage usw., bereitgestellt.

Zwischen dem DC-Teil und dem AC-Teil des Stromrichters ist üblicherweise ein Gleichspannungszwischenkreis vorgesehen, der aus einem oder mehreren, in Serie geschalteten Zwischenkreiskondensatoren besteht. Mit dem Gleichspannungszwischenkreis ist ein zumindest unidirektionaler DC/AC-Wandler verbunden, der die Zwischenkreisspannung in einer Wechselspannungsgröße des Stromrichters wandelt, oder eine Wechselspannungsgröße des Stromrichters in eine Zwischenkreisspannung wandelt.

Ein Stromrichter umfasst als leistungselektronisches Gerät zumindest einen Halbleiterschalter, wie einen Transistor, in der Regel eine Mehrzahl von Halbleiterschaltern, die von einer Steuereinheit des Stromrichters zur Energiewandlung von DC auf AC, oder umgekehrt, angesteuert werden. Daraus ergeben sich gewisse Anforderungen für den Stromrichter.

Die Steuereinheit ist üblicherweise ein mikroprozessorbasierter Bauteil oder ein integrierter Schaltkreis (wie eine anwendungsspezifische integrierte Schaltung (ASIC) oder ein Field Programmable Gate Array (FPGA)), der eine elektrische Energieversorgung benötigt. Der Stromrichter benötigt demzufolge eine elektrische Eigenenergieversorgung beispielsweise für den Betrieb der Steuereinheit oder auch für die Kühlung des Stromrichters oder für weitere Peripherie. Der Stromrichter umfasst für die elektrische Energieversorgung ein Eigenenergieversorgungsnetzteil, das AC-seitig, beispielsweise aus einem AC-Netz (Wechselspannungsquelle oder Wechselspannungssenke) oder einem AC-Ausgang des Stromrichters, versorgt werden kann. Ein Beispiel für eine solche Energieversorgung des Stromrichters kann der WO 2013/178546 A1 entnommen werden. Eine AC-seitige Versorgung ist insbesondere dann erforderlich, wenn keine Gleichspannungsquelle zur Verfügung steht, beispielsweise nachts bei einer PV-Anlage oder bei einer leeren Batterie. Falls eine Gleichspannungsquelle verfügbar ist, kann auch eine DC-seitige Energieversorgung vorgesehen sein, beispielsweise durch einen Umrichter (DC/DC-Wandler) als Eigenenergieversorgungsnetzteil. Auch eine Kombination einer AC-seitigen Versorgung mit einer DC-seitigen Versorgung ist bekannt, beispielsweise aus DE 10 2008 032 317 A1. Insbesondere ist es auch bekannt, zur Energieversorgung zwecks Reduzierung von Verlusten ein kleines AC-Netzteil für den Standby-Betrieb des Stromrichters mit einem stärkeren DC-Netzteil für einen Einspeisebetrieb aus der Gleichspannungsquelle in eine Wechselspannungsenke vorzusehen.

Oftmals ist der Gleichspannungszwischenkreis des Stromrichters als geteilter Zwischenkreis mit zumindest zwei Zwischenkreiskondensatoren in Serie ausgeführt. An jedem Zwischenkreiskondensator liegt eine DC-Spannung an, die in Summe die Zwischenkreisspannung ergeben. Bei zwei Zwischenkreiskondensatoren würde sich die Zwischenkreisspannung an den Zwischenkreiskondensatoren halbieren, sofern gleiche Zwischenkreiskondensatoren verwendet werden. Während des Betriebs des Stromrichters kann es aber bekannterweise aus verschiedenen Gründen zu unsymmetrischen DC-Spannungen an den Zwischenkreiskondensatoren kommen. Solche Unsymmetrien können zu einem nicht ordnungsgemäßen Betrieb des Stromrichters führen oder auch zu Beschädigungen von Teilen des Stromrichters. Im Betrieb des Stromrichters ist daher eine Symmetrierung der DC-Spannungen an den Zwischenkreiskondensatoren erforderlich. Hierfür sind verschiedene Ansätze bekannt. In einer einfachen Ausführung werden einfach Symmetrierwiderstände parallel zu den Zwischenkreiskondensatoren geschaltet. Über die Symmetrierwiderstände fließt aber im Betrieb permanent elektrischer Strom, was zu Verlusten und einem reduzierten Wirkungsgrad des Stromrichters führt. Es sind auch Ansätze bekannt, die die Aufteilung des Zwischenkreises auf mehrere Zwischenkreiskondensatoren zur Eigenenergieversorgung des Stromrichters nutzen. Hierfür sind aber mit den Zwischenkreiskondensatoren verbundene Schaltwandler erforderlich. Beispiele hierfür können der EP 2 826 126 B1 entnommen werden.

Eine weitere Symmetrierschaltung kann der EP 2 760 103 A1 entnommen werden. Darin wird eine Symmetrierschaltung beschrieben, die aus einem Transformator besteht, dessen Primärseite über ein Schaltelement an die Zwischenkreisspannung geschaltet ist. Die Sekundärseite des Transformators besteht aus zwei Sekundärwicklungen die jeweils in Serie mit einer Diode geschaltet sind. Jede Sekundärwicklung mit Diode ist parallel zu einem Zwischenkreiskondensator geschaltet. Aufgrund der Dioden wird sichergestellt, dass der Zwischenkreiskondensator mit der niedrigeren Spannung über den Transformator geladen wird. Nur mit dem Laden über den Transformator kann aber keine Symmetrierung sichergestellt werden, weil ein Zwischenkreiskondensator damit auch überlastet (laden über eine Nenn-Kondensatorspannung hinaus) werden kann.

Wenn der Stromrichter ausgeschalten ist, ist meist auch der Zwischenkreis entladen. Um den Stromrichter in Betrieb zu nehmen, muss daher zuerst der Zwischenkreis vorgeladen werden. Wenn hierfür DC-seitig keine DC-Spannung verfügbar ist, muss das Vorladen des Zwischenkreises AC-seitig erfolgen, beispielsweise aus einem AC-Netz. Ein Beispiel für eine AC-seitige Vorladung der Zwischenkreiskondensatoren ist der WO 2019/206910 A1 zu entnehmen.

Für diese Anforderungen, Eigenenergieversorgung, Symmetrierung und Vorladen des Zwischenkreises aus AC-Seite, sind aber unterschiedlichste Schaltungen erforderlich, die in einem Stromrichter möglichst verlustarm implementiert sein sollen. Das macht einen Stromrichter, abgesehen von den leistungselektronischen Teilen für die Energiewandlung, schaltungstechnisch aber auch aufwendig, weil eine Reihe von zusätzlichen Schaltungen notwendig ist.

Es ist daher eine Aufgabe der gegenständlichen Erfindung einen schaltungstechnisch einfachen Stromrichter anzugeben, mit dem die Eigenenergieversorgung, die Symmetrierung des Zwischenkreises und das Vorladen des Zwischenkreises aus der AC-Seite möglich ist.

Diese Aufgabe wird mit einem eingangs genannten Stromrichter mit den Merkmalen von Anspruch 1 gelöst, sowie mit einem eingangs genannten Verfahren zum Betreiben eines solchen Stromrichters nach Anspruch 5.

Durch das Vorsehen eines zusätzlichen DC/DC-Ladewandlers, der vom DC-Bus gespeist wird, lassen sich in Kombination mit dem DC/DC-Versorgungswandler auf einfache Weise die verschiedenen Betriebsarten realisieren, sodass insbesondere die Symmetrierung des Zwischenkreises und das Vorladen des Zwischenkreises aus der AC-Seite einfach umgesetzt werden kann. Auch die Eigenenergieversorgung einer Steuereinheit kann bedarfsweise durch das Vorsehen der AC/DC- und DC/DC-Versorgungswandler sichergestellt werden.

Insbesondere das Symmetrieren erfolgt durch das Nachladen der Zwischenkreiskondensatoren über den DC/DC-Ladewandler aus dem DC-Eigenversorgungsbus und das gleichzeitige Entladen des Gleichspannungszwischenkreises über den DC/DC-Versorgungswandler in den DC-Eigenversorgungsbus selbsttätig und in einer energieeffizienten Art und Weise. Die aus den Zwischenkreiskondensatoren entnommene Energie wird zumindest teilweise wieder zum Nachladen der Zwischenkreiskondensatoren verwendet, bis die Symmetrie wieder hergestellt ist.

Über den DC-Eigenversorgungsbus, an dem im Betrieb die DC-Versorgungsspannung anliegt, kann auch eine Eigenenergieversorgung bestimmter Komponenten des Stromrichters sichergestellt werden. Wenn im Stromrichter zumindest eine Steuereinheit mit einem Versorgungseingang vorgesehen ist, wobei der Versorgungseingang mit dem DC-Eigenversorgungsbus verbunden ist, dann kann auch die Eigenenergieversorgung der Steuereinheit sichergestellt werden.

In einer vorteilhaften Ausführung ist zwischen dem DC-Anschluss und dem Gleichspannungszwischenkreis zumindest ein DC/DC-Hauptwandler mit einem ersten DC-Wandleranschluss des DC/DC-Hauptwandlers und einem zweiten DC-Wandleranschluss des DC/DC-Hauptwandlers vorgesehen, wobei der DC-Anschluss des Stromrichters über den zumindest einen DC/DC-Hauptwandler mit dem Gleichspannungszwischenkreis verbunden ist, indem der erste DC-Wandleranschluss des DC/DC-Hauptwandlers mit dem DC-Anschluss des Stromrichters verbunden ist und der zweite DC-Wandleranschluss des DC/DC-Hauptwandlers mit dem Gleichspannungszwi-schenkreis verbunden ist. Damit können unterschiedliche DC-Quellen oder DC-Senken angeschlossen werden, wobei im Falle mehrerer DC/DC-Hauptwandler auch mehrere DC-Quellen oder DC-Senken angeschlossen werden können.

In einer vorteilhaften Ausgestaltung umfasst der DC/DC-Ladewandler einen Transformator mit einer Primärwicklung auf einem Transformatorkern, wobei die Primärwicklung über zumindest ein Takt-Schaltelement mit dem DC-Eigenversorgungsbus verbunden ist, dass auf der Sekundärseite des Transformators am Transformatorkern eine der Zahl der Zwischenkreiskondensatoren entsprechenden Mehrzahl an Sekundärwicklungen vorgesehen sind, wobei ein Windungsverhältnis zwischen der Primärwicklung und der jeweiligen Sekundärwicklung so gewählt ist, dass die im Betrieb des Stromrichters an einer Sekundärwicklung eine DC-Ladespannung induziert wird, die im Wesentlichen der am jeweils zugeordneten Zwischenkreiskondensator gewünschten Kondensatorspannung entspricht, und dass in Serie zu jeder Sekundärwicklung eine Diode geschaltet ist, sodass im Betrieb des Stromrichters die Diode leitet, wenn die Kondensatorspannung kleiner der jeweiligen DC-Ladespannung ist. Mit dieser Schaltung ist auf der Sekundärseite des Transformators keine aktive Regelung erforderlich, da die Dioden den Energiefluss eigenständig regulieren.

Mit dem erfindungsgemäßen Stromrichter lassen sich auf einfache Weise verschiedene Betriebsmodi realisieren.

Der mit dem Gleichspannungszwischenkreis verbundene DC/DC-Versorgungswandler kann ausgeschaltet werden, um die Zwischenkreiskondensatoren des Gleichspannungszwischenkreises über den AC/DC-Versorgungswandler, den DC-Eigenversorgungsbus und den DC/DC-Ladewandler bei fehlender Gleichspannungsgröße am DC-Anschluss vorzuladen.

Zum Symmetrieren des Gleichspannungszwischenkreises über den DC/DC-Versorgungswandler, den DC-Eigenversorgungsbus und den DC/DC-Ladewandler bei anliegender Gleichspannungsgröße am DC-Anschluss kann der DC/DC-Versorgungswandler eingeschaltet werden, sodass die Zwischenkreisspannung oder zumindest eine Kondensatorspannung eines Zwischenkreiskondensators des Gleichspannungszwischenkreises über den DC/DC-Versorgungswandler in die DC-Versorgungsspannung gewandelt wird und in den DC-Eigenversorgungsbus eingespeist wird. Damit wird der Gleichspannungszwischenkreis über den DC/DC-Versorgungswandler in den DC-Eigenversorgungsbus entladen und über den DC/DC-Ladewandler aus dem DC-Eigenversorgungsbus nachgeladen, um die Symmetrie der Kondensatorspannungen herzustellen. Dieses Symmetrieren kann auch beim Vorladen angewendet werden.

Um eine spannungsmäßige Überlastung der Zwischenkreiskondensatoren des Gleichspannungszwischenkreises zu verhindern, kann sowohl beim Vorladen als auch beim Symmetrieren vorgesehen sein, dass die Kondensatorspannungen erfasst werden und eine Ausgangsleistung des DC/DC-Ladewandlers reduziert wird, wenn eine der Kondensatorspannungen größer einer vorgegebenen Nenn-Spannung wird. Damit wird der Ladestrom für die Zwischenkreiskondensatoren reduziert und eine Überspannung an den Zwischenkreiskondensatoren verhindert.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 einen erfindungsgemäßen Stromrichter,
Fig.2 eine weitere Ausgestaltung eines erfindungsgemäßen Stromrichters und
Fig.3 eine vorteilhafte Ausführung eines DC/DC-Ladewandlers des Stromrichters.

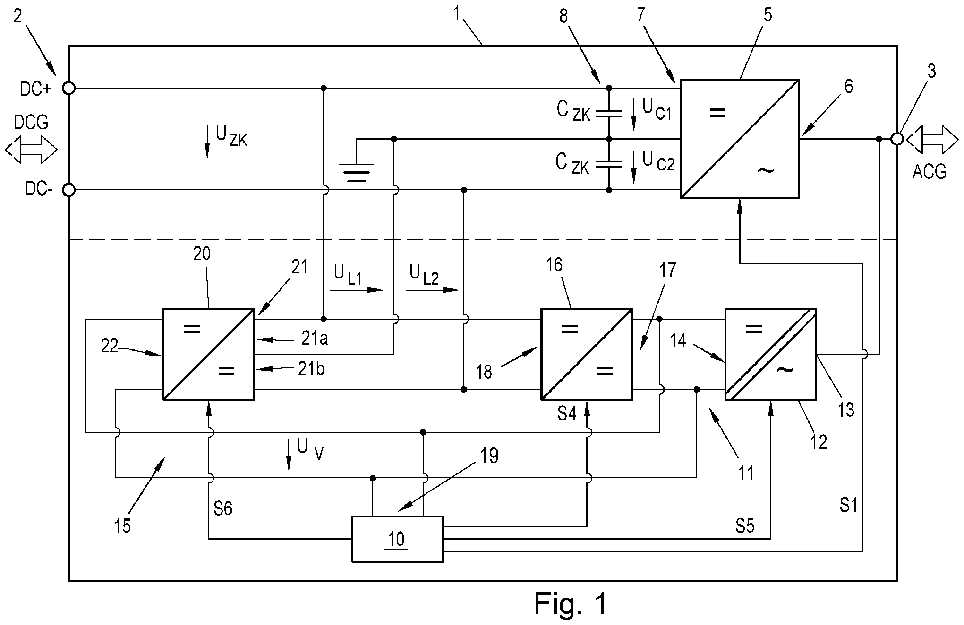

Fig.1 zeigt einen erfindungsgemäßen Stromrichter 1 (in der Ausführung als ein Spannungszwischenkreisstromrichter) mit einem DC-Anschluss 2 und einem AC-Anschluss 3. Am DC-Anschluss 2 kann im Betrieb des Stromrichters 1 über zwei Anschlusskontakte DC+, DCeine elektrische Gleichspannungsgröße DCG, wie eine DC-Spannung oder ein DC-Strom, anlegt werden. An den DC-Anschluss 2 kann eine Gleichspannungsquelle, die die Gleichspannungsgröße DCG bereitstellt, oder eine Gleichspannungssenke, die die Gleichspannungsgröße DCG aufnimmt, angeschlossen werden. Am AC-Anschluss 3 kann im Betrieb des Stromrichters 1 eine Wechselspannungsgröße ACG angelegt werden. An den AC-Anschluss 3 kann eine Wechselspannungsquelle, die die Wechselspannungsgröße ACG bereitstellt, oder eine Wechselspannungssenke, die die Wechselspannungsgröße ACG aufnimmt, angeschlossen werden. Die Wechselspannungsgröße ACG kann einphasig oder mehrphasig sein, beispielsweise dreiphasig wie im Ausführungsbeispiel nach Fig.1. Am AC-Anschluss 3 sind daher zumindest zwei Anschlusskontakte (nicht dargestellt) vorgesehen.

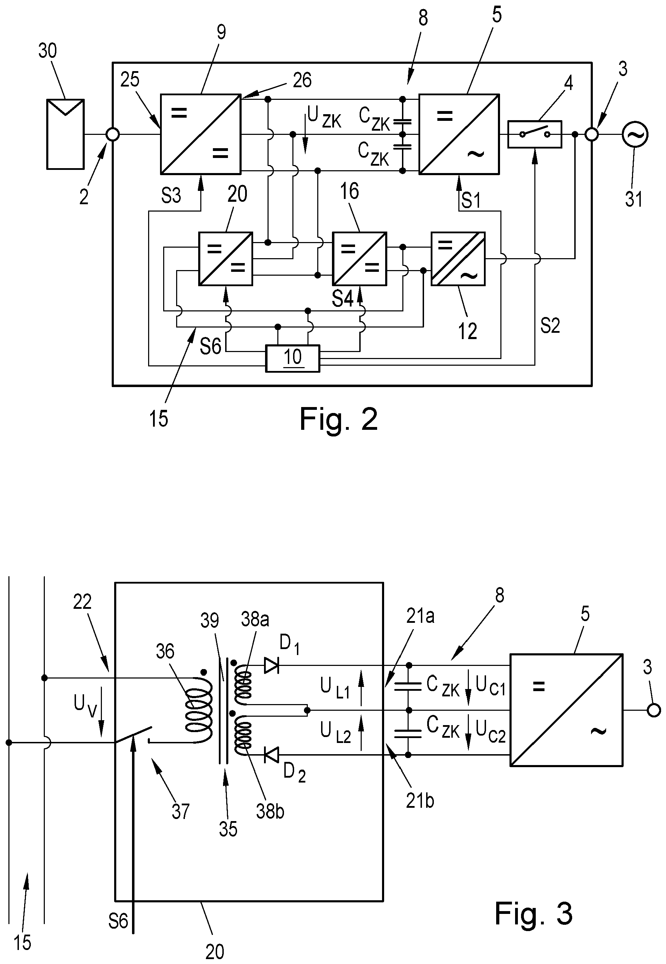

AC-seitig vor dem AC-Anschluss 3 kann im Stromrichter 1 auch eine Trenneinheit 4, wie ein Trennrelais, vorgesehen sein, um den AC-Anschluss 3 des Stromrichters 1, oder eine daran im Betrieb angeschlossene Wechselspannungsquelle oder Wechselspannungsquelle, elektrisch von den anderen Teilen des Stromrichters 1 zu trennen. Eine solche Ausführung ist in Fig.2 dargestellt.

Ebenso können im Stromrichter 1 AC-seitig, vorzugsweise vor einer Trenneinheit 4, noch weitere Schaltungskomponenten vorgesehen sein, wie beispielsweise ein bekanntes elektrisches Ausgangsfilter, das in der Regel aus einer Verschaltung von Kondensatoren und Drosseln besteht. Nachdem solche Schaltungskomponenten für die Erfindung aber unerheblich sind und darüber hinaus hinlänglich bekannt sind, werden diese in den Figuren nicht dargestellt.

Im Stromrichter 1 ist AC-seitig ein DC/AC-Hauptwandler 5 vorgesehen. Der DC/AC-Hauptwandler 5 dient der Energieübertragung des Stromrichters 1 und wandelt im Betrieb des Stromrichters 1 eine Gleichspannungsgröße in eine Wechselspannungsgröße, die an einem AC-Wandleranschluss 6 des DC/AC-Hauptwandlers 5 anliegt, oder auch umgekehrt im Falle eines bidirektionalen ersten DC/AC-Hauptwandler 5 (in umgekehrten Fall arbeitet der DC/AC-Hauptwandler 5 als AC/DC-Wandler). Der AC-Wandleranschluss 6 des DC/AC-Hauptwandlers 5 ist mit dem AC-Anschluss 3 des Stromrichters 1 verbunden, gegebenenfalls über eine Trenneinheit 4 und/oder weitere Schaltungskomponenten des Stromrichters 1.

Die AC-Energieübertragungsseite des Stromrichters 1 wird damit vom AC-Teil des DC/AC-Hauptwandlers 5 und vom AC-Anschluss 3, und gegebenenfalls der Trenneinheit 4 und/oder weitere Schaltungskomponenten zwischen Trenneinheit 4 und DC/AC-Hauptwandler 5, gebildet.

Der DC-Wandleranschluss 7 des DC/AC-Hauptwandlers 5 ist mit einem Gleichspannungszwischenkreis 8 verbunden. Der Gleichspannungszwischenkreis 8 besteht aus zumindest zwei Zwischenkreiskondensatoren C_{ZK}, die vorzugsweise gleiche Kapazitätswerte haben. Die zumindest zwei Zwischenkreiskondensatoren C_{ZK} sind seriell miteinander verschaltet. Am Gleichspannungszwischenkreis 8 liegt im Betrieb des Stromrichters 1 eine Zwischenkreisspannung U_{ZK} an, die sich aufgrund der seriellen Verschaltung der Zwischenkreiskondensatoren C_{ZK} auf Kondensatorspannungen U_{C1}, U_{C2}, die jeweils an einem Zwischenkreiskondensator C_{ZK} anliegt, aufteilt. Der DC/AC-Hauptwandler 5 erhält damit die Zwischenkreisspannung U_{ZK} als Gleichspannungsgröße zur Wandlung in die Wechselspannungsgröße am AC-Wandleranschluss 6.

In einer möglichen Ausführung des Stromrichters 1, wie in der Ausführung nach Fig.1, entspricht im Betrieb des Stromrichters 1 die Zwischenkreisspannung U_{ZK}, der am DC-Anschluss 2 anliegenden Gleichspannungsgröße DCG, in diesem Fall einer Gleichspannung. In einer anderen möglichen Ausführung des Stromrichters 1, wie in Fig.2 gezeigt, ist zwischen dem DC-Anschluss 2 und dem Gleichspannungszwischenkreis 8 zumindest ein zumindest unidirektionaler DC/DC-Hauptwandler 9 angeordnet, der im Betrieb des Stromrichters 1 der Energieübertragung des Stromrichters 1 dient und eine am DC-Anschluss 2 anliegenden Gleichspannungsgröße DCG, in diesem Fall eine Gleichspannung, in die Zwischenkreisspannung U_{ZK} wandelt, oder auch umgekehrt im Falle eines bidirektionalen Wandlers. Beispielsweise können bei einem PV-Stromrichter mehrere PV-Stränge vorgesehen sein, die jeweils an einem DC/DC-Hauptwandler 9 anliegen. Oder es könnten auch mehrere Batterien vorgesehen sein, die jeweils an einem DC/DC-Hauptwandler 9 anliegen.

Die DC-Energieübertragungsseite des Stromrichters 1 wird damit vom Gleichspannungszwischenkreis 8 und dem DC-Teil des DC/AC-Hauptwandlers 5, oder vom DC/DC-Hauptwandler 9, dem Gleichspannungszwischenkreis 8 und dem DC-Teil des DC/AC-Hauptwandlers 5, ausgebildet.

Im Betrieb erfolgt die Energieübertragung des Stromrichters 1 damit vom DC-Anschluss 2 über die DC-Energieübertragungsseite und die AC-Energieübertragungsseite zum AC-Anschluss 3, oder auch umgekehrt im Falle eines bidirektionalen Wandlers.

Für den Betrieb des Stromrichters 1 ist eine Steuereinheit 10 vorgesehen, die die einzelnen Teile des Stromrichters 1 über Steuerleitungen S1, S3 ansteuert, insbesondere den DC/AC-Hauptwandler 5 über eine Steuerleitung S1 und gegebenenfalls auch den zumindest einen DC/DC-Hauptwandler 9 über eine Steuerleitung S3. Falls vorhanden, kann die Steuereinheit 10 auch die Trenneinheit 4 über eine Steuerleitung S2 ansteuern. Die Art der über die Steuerleitungen S1, S2, S3 gesendeten Steuersignale ist für die Erfindung unerheblich. Die Steuereinheit 10 steuert im Betrieb im DC/AC-Hauptwandler 5, und gegebenenfalls auch im DC/DC-Hauptwandler 9, in bekannter Weise insbesondere Schaltelemente, wie Halbleiterschalter, wie Transistoren, an.

Die Steuereinheit 10 ist vorzugsweise als ein mikroprozessorbasierter Bauteil oder als integrierter Schaltkreis, wie eine anwendungsspezifische integrierte Schaltung (ASIC) oder ein Field Programmable Gate Array (FPGA), ausgeführt, die für den Betrieb eine elektrische Energieversorgung benötigt.

Für den Betrieb benötigt der Stromrichter 1 daher eine Eigenenergieversorgung 11, die insbesondere die elektrische Energie für den Betrieb der Steuereinheit 10, und gegebenenfalls auch für weitere Grundversorgungsbestandteile oder Peripherie, bereitstellt. Die Eigenenergieversorgung 11 des Stromrichters 1 umfasst einen AC/DC-Versorgungswandler 12, dessen AC-Wandleranschluss 13 mit dem AC-Anschluss 3 des Stromrichters 1 verbunden ist. Das stellt auch im Falle einer Trenneinheit 4 sicher, dass auch bei geöffneter Trenneinheit 4 eine Spannungsversorgung über die an den Stromrichter 1 angeschlossene Wechselspannungsquelle oder Wechselspannungssenke möglich ist. Der DC-Wandleranschluss 14 des AC/DC-Versorgungswandlers 12 ist mit einem DC-Eigenversorgungsbus 15 des Stromrichters 1 verbunden. Die Eigenenergieversorgung 11 des Stromrichters 1 umfasst auch einen DC/DC-Versorgungswandler 16, dessen erster DC-Wandleranschluss 17 mit dem DC-Eigenversorgungsbus 15 verbunden ist und dessen zweiter DC-Wandleranschluss 18 am Gleichspannungszwischenkreis 8 anliegt, sodass im Betrieb des Stromrichters 1 in dieser Ausgestaltung nach Fig.1 die Zwischenkreisspannung U_{ZK} am zweiten DC-Wandleranschluss 18 des DC/DC-Versorgungswandlers 16 anliegt. Die Steuereinheit 10 hat einen Versorgungsanschluss 19, der mit dem DC-Eigenversorgungsbus 15 verbunden ist. Es könnte aber auch ein eigenes Netzteil für die elektrische Energieversorgung der Steuereinheit 10 vorgesehen sein. In diesem Fall würde der Versorgungsanschluss 19 mit dem Netzteil verbunden sein oder auch umschaltbar mit dem Netzteil oder dem DC-Eigenversorgungsbus 15.

Damit kann der DC-Eigenversorgungsbus 15 sowohl vom AC/DC-Versorgungswandler 12 über die AC-Seite des Stromrichters 1 mit einer DC-Versorgungsspannung Uv gespeist werden, als auch über den DC/DC-Versorgungswandler 16 und den Gleichspannungszwischenkreis 8. Die Energieversorgung der Steuereinheit 10 kann damit im Betrieb des Stromrichters 1 sowohl von der AC-Seite, als auch von der DC-Seite des Stromrichters 1 erfolgen. Der AC/DC-Versorgungswandler 12 und/oder der DC/DC-Versorgungswandler 16 kann dazu auch über jeweils eine Steuerleitung S4, S5 von der Steuereinheit 10 angesteuert werden. Es kann aber auch vorgesehen sein, dass der AC/DC-Versorgungswandler 12 immer aktiv ist und daher keine Steuerleitung S5 erforderlich ist (wie in Fig.2).

Im Betrieb des Stromrichters 1 erfolgt die Bereitstellung der DC-Versorgungsspannung Uv beispielsweise über den AC/DC-Versorgungswandler 12 und dem AC-Anschluss 3 des Stromrichters 1. Bedarfsweise kann der DC-Eigenversorgungsbus 15 zusätzlich oder auch alternativ über den DC/DC-Versorgungswandler 16 mit der DC-Versorgungsspannung Uv gespeist werden. Der DC/DC-Versorgungswandler 16 hat aber erfindungsgemäß, neben der optionalen Spannungsversorgung des DC-Eigenversorgungsbus 15, noch eine andere Aufgabe, wie nachfolgend erläutert.

Im Stromrichter 1 ist auch ein DC/DC-Ladewandler 20 vorgesehen. Ein erster DC-Wandleranschluss 22 des DC/DC-Ladewandlers 20 ist mit dem DC-Eigenversorgungsbus 15 verbunden, sodass im Betrieb an diesem ersten DC-Wandleranschluss 22 die DC-Versorgungsspannung Uv anliegt. Am zweiten DC-Wandleranschluss 21 des DC/DC-Ladewandlers 20 werden gemäß der Zahl an Zwischenkreiskondensatoren C_{ZK} eine Mehrzahl an DC-Ladespannungen U_{L1}, U_{L2} an DC-Ladeanschlüssen 21a, 21b des DC-Wandleranschlusses 21 des DC/DC-Ladewandlers 20 bereitgestellt. In der Ausführung nach Fig.1 werden somit zwei DC-Ladespannungen U_{L1}, U_{L2} bereitgestellt. Der DC/DC-Ladewandler 20 wandelt somit die DC-Versorgungsspannung Uv des DC-Eigenversorgungsbusses 15 in die Mehrzahl an DC-Ladespannungen U_{L1}, U_{L2}. Der DC/DC-Ladewandler 20 hat damit einen DC-Wandleranschluss 22 mit einer Mehrzahl an DC-Ladeanschlüssen 21a, 21b, wobei jeder der DC-Ladeanschlüsse 21a, 21b jeweils mit einem der Zwischenkreiskondensatoren C_{ZK} verbunden ist. Im Betrieb des Stromrichters 1 kann vom DC/DC-Ladewandler 20 zumindest bedarfsweise an den DC-Ladeanschlüssen 21a, 21b jeweils eine DC-Ladespannung U_{L1}, U_{L2} erzeugt werden, die an den jeweils verbundenen Zwischenkreiskondensator C_{ZK} angelegt wird.

Obwohl selbstverständlich sei angemerkt, dass am DC-Eigenversorgungsbus 15 als DC-Versorgungsspannung Uv eine DC-Kleinspannung, beispielsweise im Bereich von 10-50V, vorzugsweise 20V oder 24V, anliegt, während die Zwischenkreisspannung U_{ZK} in der Regel im Bereich von einigen Hundert Volt bis Tausend Volt liegt. Der DC-Eigenversorgungsbus 15 dient insbesondere nicht der Energieübertragung des Stromrichters 1.

Diese Schaltung mit AC/DC-Versorgungswandler 12, DC/DC-Versorgungswandler 16 und DC/DC-Ladewandler 20 ermöglicht die Eigenenergieversorgung des Stromrichters 1 (wie bereits oben ausgeführt), aber auch die Symmetrierung des Gleichspannungszwischenkreises 8 und auch das Vorladen des Gleichspannungszwischenkreis 8 aus der AC-Seite auf eine einfache und energieeffiziente Art und Weise, wie nachfolgend erläutert wird.

Das Vorladen des Gleichspannungszwischenkreises 8 aus der AC-Seite des Stromrichters 1 ist beispielsweise notwendig, wenn am DC-Anschluss 2 des Stromrichters 1 keine Gleichspannungsgröße DCG verfügbar ist (beispielsweise nachts im Falle einer PV-Anlage am DC-Anschluss 2) und der Gleichspannungszwischenkreis 8 damit nicht über den DC-Anschluss 2 oder den DC/DC-Hauptwandler 9 gespeist werden kann. In diesem Fall speist der AC/DC-Versorgungswandler 12 den DC-Eigenversorgungsbus 15 über den AC-Anschluss 3, an dem eine Wechselspannungsgröße ACG anliegt, beispielsweise aus einem AC-Netz. Zum Vorladen des Gleichspannungszwischenkreises 8 wird die DC-Versorgungsspannung Uv des DC-Eigenversorgungsbusses 15 vom DC/DC-Ladewandler 20 in die DC-Ladespannungen U_{L1}, U_{L2} gewandelt, die an die Zwischenkreiskondensatoren C_{ZK} angelegt werden, womit die Zwischenkreiskondensatoren C_{ZK} auf die DC-Ladespannungen U_{L1}, U_{L2} geladen werden. Während des Vorladens des Gleichspannungszwischenkreises 8 über den DC/DC-Ladewandler 20 ist der DC/DC-Versorgungswandler 16, der ebenfalls am Gleichspannungszwischenkreis 8 und am DC-Eigenversorgungsbus 15 hängt, ausgeschaltet, um zu verhindern, dass der DC/DC-Versorgungswandler 16 gleichzeitig Energie aus dem Gleichspannungszwischenkreis 8 entnimmt und den Gleichspannungszwischenkreis 8 dabei wieder entlädt, was einem Vorladen entgegenstehen würde.

Die Vorladefunktion des Stromrichters 1 ermöglicht in gewissen Konfigurationen aber noch eine weiteren Betriebsart des Stromrichters 1. Wird beispielsweise am DC-Anschluss 2 eine PV-Anlage angeschlossen, so kann nachts von der PV-Anlage keine Gleichspannungsgröße DCG bereitgestellt werden. Damit ist der Gleichspannungszwischenkreis 8 entladen. Der Stromrichter 1 hängt aber auch nachts über den AC-Anschluss 3 an einem AC-Netz. Über den AC/DC-Versorgungswandler 12 und den DC/DC-Ladewandler 20 kann aber der Gleichspannungszwischenkreis 8 vorgeladen werden und der Stromrichter 1 damit grundsätzlich in Betrieb genommen werden. Wenn der Stromrichter 1 in Betrieb ist, dann könnte beispielsweise mit dem Stromrichter 1 Blindleistung erzeugt werden, die in das AC-Netz abgegeben wird. Die Fähigkeit eines Stromrichters 1 für PV-Anwendungen zur Abgabe von Blindleistung ist in vielen Ländern eine Anforderung der Netzbetreiber. Die Energie für die Erzeugung der Blindleistung könnte dabei vom DC/AC-Hauptwandler 5 aus dem AC-Netz entnommen werden, beispielsweise als Wirkleistung, und über den DC/AC-Hauptwandler 5 in den Gleichspannungszwischenkreis 8, konkret in die Zwischenkreiskondensatoren C_{ZK}, geladen werden.

Mit dem erfindungsgemäßen Stromrichter 1 könnte damit eine Blindleistungseinspeisung in ein AC-Netz über den AC/DC-Versorgungswandler 12, den DC-Eigenversorgungsbus 15 und den DC/DC-Ladewandler 20 sogar dann durchgeführt werden, wenn am DC-Anschluss 2 keine Gleichspannungsgröße anliegt.

Kommt es zu einer Unsymmetrie der Kondensatorspannungen U_{C1}, U_{C2} an den Zwischenkreiskondensatoren C_{ZK}, beispielsweise aufgrund nicht exakt gleicher Bauteilwerte der Zwischenkreiskondensatoren C_{ZK} kann eine solche Unsymmetrie erfindungsgemäß wie folgt ausgeglichen werden.

Ist einer der Zwischenkreiskondensatoren C_{ZK} zu gering geladen (beispielsweise eine Kondensatorspannung U_{C1}, U_{C2} bei Nenn-Spannung und eine andere darunter), beispielsweise aufgrund von unterschiedlichen Kapazitätswerten der Zwischenkreiskondensatoren C_{ZK}, so sorgt die vom DC/DC-Ladewandler 20 bereitgestellte DC-Ladespannung U_{L1}, U_{L2} dafür, dass der zu gering geladene Zwischenkreiskondensator C_{ZK} mit Kondensatorspannung U_{C1}, U_{C2} kleiner der zugeordneten DC-Ladespannung U_{L1}, U_{L2} nachgeladen wird. Die vom DC/DC-Ladewandler 20 bereitgestellte elektrische Abgabeleistung fließt damit in den Gleichspannungszwischenkreis 8 und sorgt für die Nachladung des zu gering geladenen Zwischenkreiskondensators C_{ZK}. Gleichzeitig erfolgt aber auch eine Entladung des Gleichspannungszwischenkreises 8 über den DC/DC-Versorgungswandler 16, wobei alle Zwischenkreiskondensatoren C_{ZK} gemeinsam entladen werden, da dessen zweiter DC-Wandleranschluss 18 am Gleichspannungszwischenkreis 8 anliegt. Der DC/DC-Versorgungswandler 16 ist damit gleichzeitig mit dem DC/DC-Ladewandler 20 aktiv. Die entladene elektrische Energie geht dabei nicht verloren, sondern wird dem DC/DC-Ladewandler 20 über den DC-Eigenversorgungsbus 15 wiederum zum Nachladen zur Verfügung gestellt. Die elektrische Energie wird also im Kreis geführt. Es kann also entsprechend auch der Fall sein, dass Energie, die einem Zwischenkreiskondensatoren C_{ZK} entnommen wurde, diesem wieder zugeführt wird. Dadurch wird (im Idealfall) erreicht, dass beide Zwischenkreiskondensatoren C_{ZK} auf die Nenn-Spannung (z.B. 500V) geladen werden. Mit anderen Worten kann man dieses Nachladen und gleichzeitige Entladen auch als Symmetrieren der Zwischenkreiskondensatoren C_{ZK} bezeichnen.

Würde ausschließlich eine Nachladung der Zwischenkreiskondensator C_{ZK} erfolgen, würde der zu gering geladene Zwischenkreiskondensator C_{ZK} auf das gleiche Niveau geladen wie der weitere Zwischenkreiskondensator C_{ZK}, welches allerdings über der Nenn-Spannung liegen kann und dementsprechend nicht gewollt ist. Würde ausschließlich eine Entladung erfolgen, würden beide Zwischenkreiskondensatoren C_{ZK} um dasselbe Niveau reduziert und die Unsymmetrie bliebe bestehen. Durch das gleichzeitige Nachladen und Entladen kann aber die Symmetrierung der Kondensatorspannung U_{C1}, U_{C2} erreicht werden.

Im Betrieb des Stromrichters 1 kann die Steuereinheit 10 das Nachladen und Entladen, also die Symmetrierung, koordinieren. Als Basis hierfür können Messwerte der Kondensatorspannungen U_{C1}, U_{C2}, die der DC/AC-Hauptwandler 5 liefern kann, dienen. Über die Steuerleitungen S4, S6 zum DC/DC-Ladewandler 20 und DC/DC-Versorgungswandler 16 kann der DC/DC-Versorgungswandler 16 und der DC/DC-Ladewandler 20 von der Steuereinheit 10 gesteuert werden.

Ein weiteres Beispiel einer Symmetrierung ist, wenn die Kondensatorspannung U_{C1}, U_{C2} unterschiedlich, aber beide kleiner der Nenn-Spannung sind, also beispielsweise aufgrund von Bauteiltoleranzen die Spannungen unterschiedlich aufgeteilt werden. Die Symmetrierung erfolgt auch in diesem Fall wie oben ausgeführt über den DC/DC-Versorgungswandler 16, den DC-Eigenversorgungsbus 15 und den DC/DC-Ladewandler 20. Der DC/DC-Versorgungswandler 16 hängt eingangseitig über den DC-Wandleranschluss 18 am Gleichspannungszwischenkreis 8, also an der Zwischenkreisspannung U_{ZK}. Der DC/DC-Versorgungswandler 16, der den DC-Eigenversorgungsbus 15 speist, entnimmt dem Gleichspannungszwischenkreis 8 elektrische Leistung, womit der DC/DC-Versorgungswandler 16 die Zwischenkreiskondensatoren C_{ZK} entlädt und die Kondensatorspannungen U_{C1}, U_{C2} an allen Zwischenkreiskondensatoren C_{ZK} senkt. Nachdem diese entnommene elektrische Leistung in die Eigenversorgung des Stromrichters 1 fließt, ist das sehr energieeffizient. Sinkt eine der Kondensatorspannungen U_{C1}, U_{C2} dabei unter die zugeordnete DC-Ladespannung U_{L1}, U_{L2} des DC/DC-Ladewandler 20 ab, so sorgt der DC/DC-Ladewandler 20 wieder für die Symmetrierung durch Nachladen wie oben beschrieben. Die elektrische Energie des überladenen Zwischenkreiskondensators C_{ZK} wird damit während der Symmetrierung über den DC/DC-Versorgungswandler 16, den DC-Eigenversorgungsbus 15 und den DC/DC-Ladewandler 20 im Kreis geführt und dem nun zu gering geladenen Zwischenkreiskondensatoren C_{ZK} zugeführt.

Da der DC/DC-Versorgungswandler 16 zusätzlich für die Eigenenergieversorgung zuständig ist, ist dieser gegenüber dem Ladewandler 20 im Regelfall leistungsmäßig stärker dimensioniert, also mit einer größeren Nenn-Ausgangsleistung ausgeführt. Beispielsweise könnte der DC/DC-Ladewandler 20 mit einer Leistung von 20W ausgelegt sein und der DC/DC-Versorgungswandler 16 mit einer Leistung von 50W.

Es ist offensichtlich, dass die Spannungsniveaus der verschiedenen Spannungen der diversen Wandler, insbesondere des DC/DC-Versorgungswandlers 16 und des DC/DC-Ladewandlers 20, aufeinander und auf die Nenn-Zwischenkreisspannung U_{ZK} bzw. den Nenn-Kondensatorspannungen U_{C1}, U_{C2} abzustimmen sind. Die Nenn-Spannungen sind die Spannungen, die sich im ordnungsgemäßen Betrieb des Stromrichters 1 einstellen sollten. Eine solche spannungsmäßige Dimensionierung der Wandler kann vom Fachmann ohne weiteres selbst vorgenommen werden.

Sinnvoll ist es beispielsweise, wenn die erzielbaren DC-Ladespannungen U_{L1}, U_{L2} des DC/DC-Ladewandlers 20 jeweils mindestens den an den Zwischenkreiskondensatoren C_{ZK} erwünschten Nenn-Kondensatorspannungen U_{C1}, U_{C2} entsprechen, wobei die Summe der DC-Ladespannungen U_{L1}, U_{L2} vorteilhaft der Nenn-Zwischenkreisspannung U_{ZK} entspricht.

Um die Symmetrierung auf einfach Weise sicherzustellen, könnte vorgesehen sein, dass die Ausgangsspannung des DC/DC-Versorgungswandlers 16, die als DC-Versorgungsspannung Uv in den DC-Eigenversorgungsbus 15 eingespeist wird, größer ist, als die Ausgangspannung des AC/DC-Versorgungswandlers 12, die ebenfalls in den DC-Eigenversorgungsbus 15 eingespeist wird. Beispielsweise könnte der DC/DC-Versorgungswandler 16 eine Ausgangsspannung von 24V bereitstellen und der AC/DC-Versorgungswandler 12 eine Ausgangsspannung von 20V. Damit wird der DC-Eigenversorgungsbus 15 im Betrieb des Stromrichters 1 vorrangig vom DC/DC-Versorgungswandler 16 gespeist und die oben beschriebene Symmetrierung ist sichergestellt. Natürlich könnte auch vorgesehen sein, dass die Steuereinheit 10 den DC/DC-Versorgungswandler 16 und den AC/DC-Versorgungswandler 12 ansteuert, um die Symmetrierung zu ermöglichen.

Eine spannungsmäßige Überlastung (mehr als die Nenn-Spannung eines Zwischenkreiskondensators C_{ZK}) jedes einzelnen Zwischenkreiskondensators C_{ZK} ist üblicherweise zu verhindern. Auch das kann im Falle unterschiedlich geladener Zwischenkreiskondensatoren C_{ZK} als Unsymmetrie gesehen werden und durch die Symmetrierung über den DC/DC-Versorgungswandler 16, den DC-Eigenversorgungsbus 15 und den DC/DC-Ladewandler 20 verhindert werden, weil der DC/DC-Versorgungswandler 16 die Kondensatorspannung U_{C1}, U_{C2} an jedem Zwischenkreiskondensator C_{ZK} senkt und über den DC-Eigenversorgungsbus 15 und den DC/DC-Ladewandler 20 zum Ausgleich der Unsymmetrie nutzt. Ebenso kann dabei vorgesehen sein, dass die Kondensatorspannungen U_{C1}, U_{C2} von der Steuereinheit 10 erfasst werden. Wird von mindestem einem der Zwischenkreiskondensatoren C_{ZK} dessen vorgegebene Nenn-Kondensatorspannung erreicht, kann vorgesehen sein, die elektrische Ausgangsleistung des DC/DC-Ladewandlers 20 zu reduzieren, beispielsweise durch die Steuereinheit 10, sodass eine spannungsmäßige Überlastung der Zwischenkreiskondensatoren C_{ZK} durch den DC/DC-Ladewandler 20 vermieden wird

Um eine spannungsmäßige Überlastung der Zwischenkreiskondensators C_{ZK} bei symmetrischen Kondensatorspannung U_{C1}, U_{C2} zu verhindern, kann gleichfalls vorgesehen sein, dass die Kondensatorspannungen U_{C1}, U_{C2} von der Steuereinheit 10 erfasst werden. Wird von mindestem einem der Zwischenkreiskondensatoren C_{ZK} dessen Nenn-Kondensatorspannung erreicht, kann vorgesehen sein, die elektrische Ausgangsleistung des DC/DC-Ladewandlers 20 zu reduzieren, beispielsweise durch die Steuereinheit 10, sodass eine spannungsmäßige Überlastung der Zwischenkreiskondensatoren C_{ZK} vermieden wird.

Auch beim Vorladen des Gleichspannungszwischenkreis 8 kann es zu einer Unsymmetrie der Kondensatorspannungen U_{C1}, U_{C2} kommen, wie oben ausgeführt. Damit kann auch beim Vorladen über den DC/DC-Ladewandler 20 eine Symmetrierung über den DC/DC-Versorgungswandler 16, den DC-Eigenversorgungsbus 15 und den DC/DC-Ladewandler 20 wie oben ausgeführt erfolgen. Damit kann auch beim Vorladen zum Symmetrieren der DC/DC-Versorgungswandler 16 aktiviert werden. Dieser Betriebsfall stellt damit eine Symmetrierung wie oben beschrieben dar. Beim Vorladen kann die vom DC/DC-Versorgungswandler 16 aufgenommene Leistung auch begrenzt werden, beispielsweise durch die Steuereinheit 10, um das Vorladen nicht zu behindern, aber trotzdem bedarfsweise die Kondensatorspannungen U_{C1}, U_{C2} zu senken.

Ebenso kann beim Vorladen vorgesehen sein, dass die Kondensatorspannungen U_{C1}, U_{C2} von der Steuereinheit 10 erfasst werden. Wird von mindestem einem der Zwischenkreiskondensatoren C_{ZK} dessen Nenn-Spannung erreicht, kann vorgesehen sein, die elektrische Ausgangsleistung des DC/DC-Ladewandlers 20 zu reduzieren, beispielsweise durch die Steuereinheit 10, sodass eine spannungsmäßige Überlastung der Zwischenkreiskondensatoren C_{ZK} vermieden wird. Das kann mit oder auch ohne Einschalten des DC/DC-Versorgungswandlers 16 erfolgen.

Beim Vorladen, beispielsweise zur Vorbereitung einer Blindleistungseinspeisung, ist der AC/DC-Versorgungswandler 12 aktiv, weil damit der DC-Eigenversorgungsbus 15 gespeist wird. All das kann über die Steuereinheit 10 gesteuert sein, beispielsweise über die entsprechenden Steuerleitungen.

Fig.2 zeigt einen erfindungsgemäßen Stromrichter 1 im Betrieb mit einer Gleichspannungsquelle 30, in diesem Fall eine PV-Anlage, die an den DC-Anschluss 2 angeschlossen ist und die Gleichspannungsgröße DCG bereitstellt. In der Ausführung des Stromrichters 1 nach Fig.2 ist auch ein DC/DC-Hauptwandler 9 vorgesehen, wie schon oben beschrieben. Am AC-Anschluss 3 ist eine Wechselspannungssenke 31, in diesem Fall ein dreiphasiges AC-Netz, angeschlossen. Der Stromrichter 1 ermöglicht einen Energiefluss von der Gleichspannungsquelle 30 zur Wechselspannungssenke 31, also beispielsweise einen Einspeisebetrieb der PV-Anlage in das AC-Netz. Es ist aber selbstverständlich, dass die Gleichspannungsquelle 30 auch eine andere Spannungsquelle, wie eine Batterie, ein DC-Netz usw., sein könnte. In diesem Fall könnte der Energiefluss auch umgekehrt sein und elektrische Energie auch von der AC-Seite auf die DC-Seite des Stromrichters 1 übertragen werden. Beispielsweise könnte der Stromrichter 1 zum Laden einer am DC-Anschluss 2 angeschlossenen Batterie aus einem am AC-Anschluss 3 angeschlossenen AC-Netz oder einer Windkraftanlage vorgesehen sein. Mit einer solchen Konfiguration ist auch ein bidirektionaler Betrieb denkbar, mit einem Energiefluss aus der Batterie oder einem DC-Netz in ein AC-Netz oder umgekehrt aus dem AC-Netz in eine Batterie oder ein DC-Netz. Eine Kombination von unidirektional und bidirektional ist auch möglich, da mehrere DC/DC-Hauptwandler 9 möglich sind.

In den mit Bezugnahme auf die Fig.1 und 2 beschriebenen Stromrichtern 1 ist der DC/DC-Versorgungswandler 16 über den DC-Wandleranschluss 18 mit der Zwischenkreisspannung U_{ZK} des Gleichspannungszwischenkreises 8 verbunden.

Es wäre aber grundsätzlich auch denkbar, dass der DC-Wandleranschluss 18 des DC/DC-Versorgungswandler 16 mit einer der Kondensatorspannungen U_{C1}, U_{C2} oder mit mehreren Kondensatorspannungen U_{C1}, U_{C2} verbunden ist. Der DC/DC-Versorgungswandler 16 hat in diesem Fall auch zumindest einen Mittelanschluss, je nach Anzahl der verbundenen Kondensatorspannung U_{C1}, U_{C2}. Er kann daher so betrieben werden, dass ein stärker geladener Zwischenkreiskondensatoren C_{ZK} entladen wird. Es kann also entsprechend Energie, die einem Zwischenkreiskondensatoren C_{ZK} entnommen wurde, einem anderen Zwischenkreiskondensatoren C_{ZK} im Wesentlichen direkt zugeführt werden. Damit beschleunigt der an der Symmetrierung der Zwischenkreiskondensatoren C_{ZK} beteiligte DC/DC-Versorgungswandler 16 die Dauer der Symmetrierung.

Für die Erfindung ist es unerheblich, wie die einzelnen Wandler des Stromrichters 1 ausgeführt sind. Grundsätzlich sind alle möglichen und bekannten Schaltungstopologien für den DC/AC-Hauptwandler 5, den DC/DC-Hauptwandler(n) 9 (sofern vorhanden), den AC/DC-Versorgungswandler 12, den DC/DC-Versorgungswandler 16 und den DC/DC-Ladewandler 20 denkbar und einsetzbar.

Fig.3 zeigt eine besonders vorteilhafte Ausgestaltung eines DC/DC-Ladewandlers 20. Der DC/DC-Ladewandler 20 umfasst in dieser Ausgestaltung einen Transformator 35 mit einer Primärwicklung 36 auf einem Transformatorkern 39, die über ein Takt-Schaltelement 37 an den DC-Eigenversorgungsbus 15 angeschlossen ist. Das Takt-Schaltelement 37 kann beispielsweise über eine Steuerleitung S6 von der Steuereinheit 10 angesteuert werden, um die Versorgungsspannung Uv des DC-Eigenversorgungsbusses 15 an der Primärwicklung 36 mit einer vorgegebenen Taktfrequenz zu takten. Auf der Sekundärseite des Transformators 35 sind am selben Transformatorkern 39 eine der Zahl der Zwischenkreiskondensatoren C_{ZK} entsprechenden Mehrzahl an Sekundärwicklungen 38a, 38b vorgesehen, im Ausführungsbeispiel der Fig.3 zwei Sekundärwicklungen 38a, 38b. Das Windungsverhältnis zwischen der Primärwicklung 36 und der jeweiligen Sekundärwicklung 38a, 38b ist vorzugsweise so gewählt, dass die im Betrieb an einer Sekundärwicklung 38a, 38b induzierte DC-Ladespannung U_{L1}, U_{L2} im Wesentlichen (bis auf eine Durchlassspannung der Diode D1, D2) der am jeweils zugeordneten Zwischenkreiskondensator C_{ZK} gewünschten Kondensatorspannung U_{C1}, U_{C2} entspricht. In Serie zu jeder Sekundärwicklung 38a, 38b ist eine Diode D1, D2 geschaltet und zwar so, dass die Diode D1, D2 leitet, wenn die Kondensatorspannung U_{C1}, U_{C2}, kleiner der jeweiligen DC-Ladespannungen U_{L1}, U_{L2} ist. Eine Diode D1, D2 sperrt damit, wenn eine Kondensatorspannung U_{C1}, U_{C2} gleich oder größer der jeweiligen DC-Ladespannungen U_{L1}, U_{L2} ist und leitet, wenn die Kondensatorspannung U_{C1}, U_{C2} um die Durchbruchspannung der Diode D1, D2 kleiner der jeweiligen DC-Ladespannungen U_{L1}, U_{L2} ist. Damit sorgt diese Schaltung des DC/DC-Ladewandlers 20 für ein selbsttätiges Nachladen bis zur Symmetrierung der Kondensatorspannungen U_{C1}, U_{C2} der Zwischenkreiskondensatoren C_{ZK} bei zu gering geladenen Zwischenkreiskondensatoren C_{ZK} wie oben beschrieben. Über die Taktung des Takt-Schaltelements 37 oder eine geeignete Betriebsführungsstrategie (beispielsweise einem eingestellten Peakstrom) in der Steuereinheit 10 kann auch die mit dem DC/DC-Ladewandler 20 übertragene Energie gesteuert werden, um beispielsweise darauf Einfluss zu nehmen, wie schnell eine Unsymmetrie an den Zwischenkreiskondensatoren C_{ZK} ausgeglichen wird.

In den dargestellten Ausführungsbeispielen ist jeweils eine Steuereinheit 10 dargestellt. Es ist aber selbstverständlich, dass im Stromrichter 1 auch eine verteilte Steuerung mit einer Mehrzahl von einzelnen Steuereinheiten 10 vorgesehen sein kann. In einer verteilten Steuerung kann zumindest eine Steuereinheit 10, vorzugsweise alle Steuereinheiten 10, über die Eigenenergieversorgung 11 wie oben beschreiben elektrisch versorgt sein.

## Patentansprüche

1. Stromrichter mit einem DC-Anschluss (2), an dem im Betrieb eine elektrische Gleichspannungsgröße (DCG) anlegbar ist, und einem AC-Anschluss (3), an dem im Betrieb eine elektrische Wechselspannungsgröße (ACG) anlegbar ist, wobei im Stromrichter (1) ein DC/AC-Hauptwandler (5) mit einem DC-Wandleranschluss (7) und einem AC-Wandleranschluss (6) vorgesehen ist und der AC-Wandleranschluss (6) mit dem AC-Anschluss (3) des Stromrichters (1) verbunden ist und der DC-Wandleranschluss (7) mit einem Gleichspannungszwischenkreis (8), an dem im Betrieb des Stromrichters (1) eine Zwischenkreisspannung (U_{ZK}) anliegt, verbunden ist, wobei der Gleichspannungszwischenkreis (8) zumindest zwei in Serie geschalteten Zwischenkreiskondensatoren (C_{ZK}) umfasst und an den Zwischenkreiskondensatoren (C_{ZK}) im Betrieb des Stromrichters (1) jeweils eine Kondensatorspannung (U_{C1}, U_{C2}) anliegt, wobei der DC-Anschluss (2) des Stromrichters (1) mit dem Gleichspannungszwischenkreis (8) verbunden ist, wobei im Stromrichter (1) ein AC/DC-Versorgungswandler (12) vorgesehen ist, der mit einem AC-Wandleranschluss (13) des AC/DC-Versorgungswandlers (12) mit dem AC-Anschluss (3) des Stromrichters (1) verbunden ist und mit einem DC-Wandleranschluss (14) des AC/DC-Versorgungswandlers (12) mit einem DC-Eigenversorgungsbus (15) des Stromrichters (1) verbunden ist, **dadurch gekennzeichnet, dass** im Stromrichter (1) ein DC/DC-Versorgungswandler (16) vorgesehen ist, wobei ein erster DC-Wandleranschluss (17) des DC/DC-Versorgungswandlers (16) mit dem DC-Eigenversorgungsbus (15) verbunden ist und ein zweiter DC-Wandleranschluss (18) des DC/DC-Versorgungswandlers (16) mit dem Gleichspannungszwischenkreis (8) verbunden ist und im Betrieb des Stromrichters (1) am zweiten DC-Wandleranschluss (18) des DC/DC-Versorgungswandlers (16) die Zwischenkreisspannung (U_{ZK}) oder zumindest eine Kondensatorspannung (U_{C1}, U_{C2}) anliegt, **und dass** im Stromrichter (1) ein DC/DC-Ladewandler (20) vorgesehen ist, wobei ein erster DC-Wandleranschluss (22) des DC/DC-Ladewandlers (20) mit dem DC-Eigenversorgungsbus (15) verbunden ist und ein zweiter DC-Wandleranschluss (21) des DC/DC-Ladewandlers (20) mit einer der Zahl der Zwischenkreiskondensatoren (C_{ZK}) entsprechenden Zahl an DC-Ladeanschlüssen (21a, 21b) ausgeführt ist, wobei jeder DC-Ladeanschluss (21a, 21b) mit je einem Zwischenkreiskondensator (C_{ZK}) verbunden ist.

2. Stromrichter nach Anspruch 1, **dadurch gekennzeichnet, dass** zwischen dem DC-Anschluss (2) und dem Gleichspannungszwischenkreis (8) zumindest ein DC/DC-Hauptwandler (9) mit einem ersten DC-Wandleranschluss (25) des DC/DC-Hauptwandlers (9) und einem zweiten DC-Wandleranschluss (26) des DC/DC-Hauptwandlers (9) vorgesehen ist, wobei der DC-Anschluss (2) des Stromrichters (1) über den zumindest einen DC/DC-Hauptwandler (9) mit dem Gleichspannungszwischenkreis (8) verbunden ist, indem der erste DC-Wandleranschluss (25) des DC/DC-Hauptwandlers (9) mit dem DC-Anschluss (2) des Stromrichters (1) verbunden ist und der zweite DC-Wandleranschluss (26) des DC/DC-Hauptwandlers (9) mit dem Gleichspannungszwischenkreis (8) verbunden ist.

3. Stromrichter nach Anspruch 1 oder 2, **dadurch gekennzeichnet, dass** der DC/DC-Ladewandler (20) einen Transformator (35) mit einer Primärwicklung (36) auf einem Transformatorkern (39) umfasst, wobei die Primärwicklung (36) über zumindest ein Takt-Schaltelement (37) mit dem DC-Eigenversorgungsbus (15) verbunden ist, **dass** auf der Sekundärseite des Transformators (35) am Transformatorkern (39) eine der Zahl der Zwischenkreiskondensatoren (C_{ZK}) entsprechenden Zahl an Sekundärwicklungen (38a, 38b) vorgesehen sind, wobei ein Windungsverhältnis zwischen der Primärwicklung (36) und der jeweiligen Sekundärwicklung (38a, 38b) so gewählt ist, **dass** im Betrieb des Stromrichters (1) an einer Sekundärwicklung (38a, 38b) eine DC-Ladespannung (U_{L1}, U_{L2}) induziert wird, die im Wesentlichen der am jeweils zugeordneten Zwischenkreiskondensator (C_{ZK}) gewünschten Kondensatorspannung (U_{C1}, U_{C2}) entspricht und jede DC-Ladespannung (U_{L1}, U_{L2}) jeweils an einen Zwischenkreiskondensator (C_{ZK}) anliegt, **und dass** in Serie zu jeder Sekundärwicklung (38a, 38b) eine Diode (D1, D2) geschaltet ist, sodass im Betrieb des Stromrichters (1) die Diode (D1, D2) leitet, wenn die Kondensatorspannung (U_{C1}, U_{C2}) kleiner der jeweiligen DC-Ladespannung (U_{L1}, U_{L2}) ist.

4. Stromrichter nach einem der Ansprüche 1 bis 3, **dadurch gekennzeichnet, dass** im Stromrichter (1) zumindest eine Steuereinheit (10) mit einem Versorgungseingang (19) vorgesehen ist, wobei der Versorgungseingang (19) mit dem DC-Eigenversorgungsbus (15) verbunden ist.

5. Verfahren zum Betreiben eines Stromrichters (1) mit einem DC-Anschluss (2), an dem eine elektrische Gleichspannungsgröße (DCG) angelegt wird, und mit einem AC-Anschluss (3), an dem eine elektrische Wechselspannungsgröße (ACG) angelegt wird, wobei im Stromrichter (1) eine Zwischenkreisspannung (U_{ZK}) eines Gleichspannungszwischenkreis (8) mit zumindest zwei in Serie geschalteten Zwischenkreiskondensatoren (C_{ZK}) an denen jeweils eine Kondensatorspannung (U_{C1}, U_{C2}) anliegt, mit einem DC/AC-Hauptwandler (5) in die Wechselspannungsgröße (ACG) umgewandelt wird, oder umgekehrt, wobei die Zwischenkreisspannung (U_{ZK}) des Gleichspannungszwischenkreises (8) im normalen Betrieb über den DC-Anschluss (2) bereitgestellt wird, oder umgekehrt, wobei ein DC-Eigenversorgungsbus (15) des Stromrichters (1) über einen mit dem AC-Anschluss (3) verbundenen AC/DC-Versorgungswandler (12) mit einer DC-Versorgungsspannung (Uv) gespeist wird, **dadurch gekennzeichnet, dass** ein DC/DC-Ladewandler (20) die DC-Versorgungsspannung (Uv) des DC-Eigenversorgungsbusses (15) in eine der Zahl der Zwischenkreiskondensatoren (C_{ZK}) entsprechenden Zahl an DC-Ladespannungen (U_{L1}, U_{L2}) wandelt und jede DC-Ladespannung (U_{L1}, U_{L2}) jeweils an einen Zwischenkreiskondensator (C_{ZK}) angelegt wird **und dass** ein mit dem Gleichspannungszwischenkreis (8) verbundener DC/DC-Versorgungswandler (16) ausgeschaltet wird, um die Zwischenkreiskondensatoren (C_{ZK}) des Gleichspannungszwischenkreises (8) über den AC/DC-Versorgungswandler (12), den DC-Eigenversorgungsbus (15) und den DC/DC-Ladewandler (20) bei fehlender Gleichspannungsgröße (DCG) am DC-Anschluss (2) vorzuladen oder der DC/DC-Versorgungswandler (16) eingeschaltet wird, sodass die Zwischenkreisspannung (U_{ZK}) oder zumindest eine Kondensatorspannung (U_{C1}, U_{C2}) eines Zwischenkreiskondensators (C_{ZK}) des Gleichspannungszwischenkreises (8) über den DC/DC-Versorgungswandler (16) in die DC-Versorgungsspannung (Uv) gewandelt wird und in den DC-Eigenversorgungsbus (15) eingespeist wird, um die Zwischenkreiskondensatoren (C_{ZK}) des Gleichspannungszwischenkreises (8) über den DC/DC-Versorgungswandler (16), den DC-Eigenversorgungsbus (15) und den DC/DC-Ladewandler (20) bei anliegender Gleichspannungsgröße (DCG) am DC-Anschluss (2) zu symmetrieren.

6. Verfahren nach Anspruch 5, **dadurch gekennzeichnet, dass** beim Vorladen und/oder beim Symmetrieren die Kondensatorspannungen (U_{C1}, U_{C2}) erfasst werden und eine Ausgangsleistung des DC/DC-Ladewandlers (20) reduziert wird, wenn eine der Kondensatorspannungen (U_{C1}, U_{C2}) größer einer vorgegebenen Nenn-Kondensatorspannung wird.

7. Verfahren nach Anspruch 5 oder 6, **dadurch gekennzeichnet, dass** die Gleichspannungsgröße (DCG) am DC-Anschluss (2) mit einem DC/DC-Hauptwandler (9) des Stromrichters (1) in die Zwischenkreisspannung (U_{ZK}) des Gleichspannungszwischenkreises (8), oder umgekehrt, gewandelt wird.

8. Verfahren nach einem der Ansprüche 5 bis 7, **dadurch gekennzeichnet, dass** eine Steuereinheit (10) des Stromrichters (1) über den DC-Eigenversorgungsbus (15) mit der DC-Versorgungsspannung (Uv) versorgt wird.
